# EUROPÄISCHE PATENTSCHRIFT

(11) **EP 0 574 683 B1**
(45) Veröffentlichungstag und Bekanntmachung des Hinweises auf die Patenterteilung: **19.03.1997**
(21) Anmeldenummer: 93107037.9
(22) Anmeldetag: 30.04.1993
(51) Int. Cl.: F16D 1/09, B23B 31/30

(54) **Kupplung zum reibschlüssigen Verbinden einer Welle mit einem Maschinenteil**
A coupling for frictional attachment of a shaft with a machine member
Accouplement à friction d'un arbre avec un élément de machine

(30) Priorität: 19.06.1992 DE 4219882
(43) Veröffentlichungstag der Anmeldung: 22.12.1993
(73) Patentinhaber: J.M. Voith GmbH, D-89522 Heidenheim (DE)
(72) Erfinder: Elsner, Ernst, W-7922 Herbrechtingen (DE)
(74) Vertreter: Weitzel, Wolfgang, Dr.-Ing. Patentanwalt

(56) Entgegenhaltungen:
- WO-A-84/04367
- DE-C- 3 640 631
- DE-U- 8 804 418
- GB-A- 1 230 519

## Beschreibung

Die Erfindung betrifft eine reibschlüssige Verbindung einer Welle mit einem Maschinenteil mit einer Kupplung gemäß dem Oberbegriff von Anspruch 1.

Eine Kupplung zur Realisierung einer reibschlüssigen Verbindung der eingangs genannten Art ist aus der GB-A-1 230 519 bekannt. Es handelt sich dabei um eine lösbare Spannzange, die aufgrund ihrer kegeligen Ausbildung mittels eines Kolbens unter axiale Vorspannung gesetzt werden kann, um eine Welle schnell axial und gegen Drehung zu fixieren. Dabei soll sich die Fixierung auch rasch wieder lösen lassen. Die Berührfläche zwischen der Welle oder Stange einerseits und der diese unter Reibschluß umschließenden Muffe ist sehr kurz ausgebildet und dadurch hoch beansprucht. Diese Vorrichtung ist daher nicht zur Übertragung sehr hoher Drehmomente geeignet. Insbesondere aber weist die Berührfläche zwischen der Spannmuffe und der zu fixierenden Stange einen großen kegeligen Spalt auf, was große Verformungsarbeit innerhalb der Spannvorrichtung erfordert. Der ringförmige Kolben steht unter axialer Federkraft, so daß in drucklosem Zustand zumindest eine vorläufige Fixierung der Stange oder Welle eintritt. Zum endgültigen Fixieren muß dennoch Druckmedium zugeführt werden, was aber zu Dichtheitsproblemen zwischen dem inneren Druckraum und der Austrittsbohrung der Welle aus der Vorrichtung führen kann. Um eine andauernde Fixierung zwischen der Vorrichtung und der Welle bzw. Stange herbeizuführen, ist es daher notwendig, auch dauernd Medium unter hohem Druck zuzuführen.

Aus der GB-A-950 728 ist ferner eine Schnellöse-Kupplung bekannt, die sich insbesondere zum zeitweisen Ein- und Ausrücken von nabenförmigen Teilen auf einer Welle, also für Schaltvorgänge, eignet. Dazu sind im nabenförmigen Teil axial verschiebbare Keile angeordnet, die mittels beidseitig angeordneter Kolben-Zylindereinheiten beaufschlagt werden können. Zwischen den Keilen und der Welle sind jeweils Rollglieder angebracht, um ein zeitweises Abrollen der Nabe, z. B. eines Zahnrades, zu ermöglichen. Damit kann zwar zwischen der Welle und der Nabe zeitweise ein Drehmoment übertragen werden, aber nur so lange, wie eine Axialkraft von einer Kolben-Zylinder-Einheit auf die Keile wirkt. Die Übertragung der Axialkraft auf die Keile innerhalb der Nabe muß ferner über Axiallager erfolgen, weil die Kolben-Zylinder-Einheiten drehfest am Gehäuse befestigt sind. Aufgrund der steilen Flanken der Keile und drehbaren Ausführung der Axialkrafteinleitung ist diese Kupplung nicht für die Übertragung hoher statischer Drehmomente, z. B. im Schwermaschinenbau, geeignet.

Eine Verbindung zwischen einer Nabe und einer als Hohlwelle ausgebildeten Welle ist aus der US-A-2 293 085 bekannt. Ein mit Druckmittel beaufschlagbarer Kolben in einem Zylinder oder eine Gewinespindel übt auf einen kegeligen Dorn eine Axialkraft aus, so daß über Rollglieder auf der kegeligen Oberfläche des Dornes eine radiale Spreizung einer die Rollglieder umschließenden Hülse hervorgerufen wird. Die Rollglieder befinden sich auf entsprechenden Rollbahnen in axialer Richtung auf dem Dorn und verteilen die Radialkraft punktuell entlang der axialen Erstreckung der Kupplung und an mehreren Stellen am Umfang der Hülse. Dadurch kann zwar eine Spannkraft zum reibschlüssigen Befestigen der Nabe erzielt werden, aber diese Spannkraft ist nicht gleichmäßig verteilt. Dadurch entsteht eine wellenartige Verformung der Hohlwelle in Umfangs- und Axialrichtung beiderseits der Nabe. Nabenteile, die exakt rund bleiben sollen, also z. B. Zahnräder oder empfindliche Walzen, lassen sich mit dieser Kupplung nicht exakt befestigen.

Eine hydraulische Reibungskupplung zur Realisierung einer Welle-Nabe-Verbindung ist des weiteren aus der WO-A-84/04367 bekannt. Diese umfaßt eine ringförmige Kammer, in welcher ein ringförmiger Kolben angeordnet ist. Die ringförmige Kammer wird von einer inneren und einer äußeren Hülse gebildet, die jeweils mit ihren vom Kolben wegweisenden Flächen mit den beiden zu verbindenden Bauteilen wenigstens mittelbar gekoppelt sind. Der Kolben sowie die ringförmige Kammer sind konisch gestaltet. Der Kolben ist in der ringförmigen Kammer mittels Druckbeaufschlagung axial verschiebbar und ermöglicht aufgrund der Konizität ein Verspannen oder ein Lösen der beiden Hülsen und damit der beiden miteinander zu verbindenden Maschinenteile. Zu diesem Zweck sind in der äußeren Hülse Druckmittelanschlüsse vorgesehen, welche zu beiden Seiten des Kolbens münden. Der Kolben weist des weiteren Schmiermittelnuten auf, die sich im wesentlichen von einer Stirnseite des Kolbens in Richtung der anderen erstrecken, wobei die Nuten jedoch nicht am anderen Ende münden. Die Beaufschlagung mit Schmiermittel erfolgt über die Druckmittelanschlüsse bei Beaufschlagung der Druckkammern zu beiden Seiten des Kolbens.

Kupplungen der eingangs beschriebenen Art haben sich in der Praxis an sich gut bewährt. Häufig ist es jedoch schwierig, mit dem vorhandenen Raum auszukommen, und zwar in radialer Hinsicht. Dabei ist der Bohrungsdurchmesser des mit der Welle zusammenzukuppelnden Maschinenteiles vorgegeben. Desgleichen läßt sich der Wellendurchmesser nicht beliebig verkleinern, da ein gewisses Mindest-Drehmoment übertragen werden muß. Hieraus folgt, daß für die eigentlichen Kupplungsteile häufig nur ein relativ geringer radialer Raum verbleibt. Dabei müssen natürlich alle Funktionen der Kupplung einwandfrei erfüllt werden, vor allem die Funktionen des Spannens und Lösens sowie diejenige des Schmierens des Kolbens.

Der Erfindung liegt die Aufgabe zugrunde, eine Kupplung gemäß dem Oberbegriff von Anspruch 1 anzugeben, die für geringe radiale Bauhöhe geeignet ist, d.h. für einen kleinen Bauraum zwischen Bohrungsdurchmesser des Maschinenteiles und dem Außendurchmesser der hiermit zu verbindenden Welle. Diese Aufgabe wird durch die kennzeichnenden Merkmale von Anspruch 1 gelöst.

Der Erfinder hat erkannt, daß es nicht wie seither des aufwendigen Gehäuses bedarf, das zwei zueinander konzentrische Hülsen mit der dazwischen befindlichen Ringkammer bedarf. Vielmehr genügt es, nur eine einzige Hülse als Gehäuse vorzusehen. Die innere Mantelfläche dieser Hülse bildet zusammen mit der äußeren Mantelfläche der Welle die Ringkammer zur Aufnahme des Kolbens. Somit wird radialer Bauraum eingespart.

In weiterer Ausgestaltung der Erfindung ist der Kolben auf seiner inneren und auf seiner äußeren Mantelfläche jeweils mit seiner Aussparung versehen, die sich am besten in einem mittleren Bereich seiner axialen Erstreckung befindet. Diese Aussparungen nehmen - wiederum in axialer Richtung gesehen - einen wesentlichen Teil der Kolbenlänge ein. Der Sinn liegt darin, daß die gleitenden und damit reibenden Flächen verkleinert werden, womit zugleich die Reibung herabgesetzt wird. Deshalb braucht man zum Verschieben des Kolbens in axialer Richtung zwecks Spannens und Lösens geringere Kräfte aufzubringen. Dies wiederum bedeutet, daß man bei gleich großem Flächendruck die Stirnflächen des Kolbens kleiner bemessen kann, was wiederum radiale Bauhöhe einspart. Somit trägt auch diese Maßnahme zur Lösung der gestellten Aufgabe bei.

Die Erfindung ist anhand der Zeichnung näher erläutert. Darin ist im einzelnen folgendes dargestellt:
- Fig. 1: zeigt eine Kupplung in schematischer Darstellung, wobei alle Teile außer der Welle in einem Axialschnitt gezeigt sind.
- Fig. 2: zeigt eine alternative Ausführungsform des Anschlußteiles der Kupplung von Fig. 1.
- Fig. 3: zeigt eine Draufsicht auf die Mantelfläche des Kolbens in der Abwicklung.
- Fig. 4: zeigt eine Ansicht des Kolbens in einem Axialschnitt.
- Fig. 5: zeigt eine weitere Ausführungsform einer erfindungsgemäßen in einer Gesamtansicht, wobei wiederum die die Welle umgebenden Teile in einer Axialebene geschnitten sind.
- Fig. 6: zeigt in vergrößerter Darstellung eine alternative Ausbildung eines Teiles des Gegenstandes von Fig. 1.

Die in den Figuren dargestellte Kupplung dient zum reibschlüssigen Verbinden einer Welle 1 mit einem nur andeutungsweise gezeigten Maschinenteil 2, im vorliegenden Falle einem Kalibrierring eines Walzwerks. Man erkennt ein Gehäuse 3, das im wesentlichen aus einer Buchse besteht, und das mit der Welle 1 eine Ringkammer 4 bildet. Das Gehäuse 3 weist eine zylindrische Außenfläche auf, gleich dem Maschinenteil 2. Maschinenteil 2 ist auf Gehäuse 3 aufgeschoben, so daß die Bohrungslaibung des Maschinenteils 2 satt an der äußeren Mantelfläche des Gehäuses 3 anliegt.

Gehäuse 3 bildet zusammen mit der Mantelfläche der Welle 1 eine Ringkammer 4. In dieser ist ein Kolben 5 angeordnet. Sowohl die innere Mantelfläche des Gehäuses 3 als auch die äußere Mantelfläche des Kolbens 5 sind leicht konisch. Der Kolben 5 ist in axialer Richtung unter dem Einfluß eines hydraulischen Druckmediums verschiebbar. Das Druckmedium ist über Anschlüsse 6 und 7 sowie über Leitungen 8 und 9 an einer Stelle in en Ringraum einleitbar, an der sich jeweils eine Stimfläche des Kolbens 5 befindet. Im dargestellten Ausführungsbeispiel sind Druckanschluß 7 und Leitung 9 mit Druckmedium beaufschlagt, so daß der Kolben nach links verschoben wurde und damit in die Löseposition. Wie man erkennt, ist das linke Kolbenende aufgrund der Konizität des Kolbens stärker als das rechte. Bei der genannten Verschiebebewegung von links nach rechts wird das Gehäuse aufgeweitet, und legt sich stramm an die Lochlaibung des Maschinenteiles 2 an, so daß eine reibschlüssige Verbindung hergestellt wird.

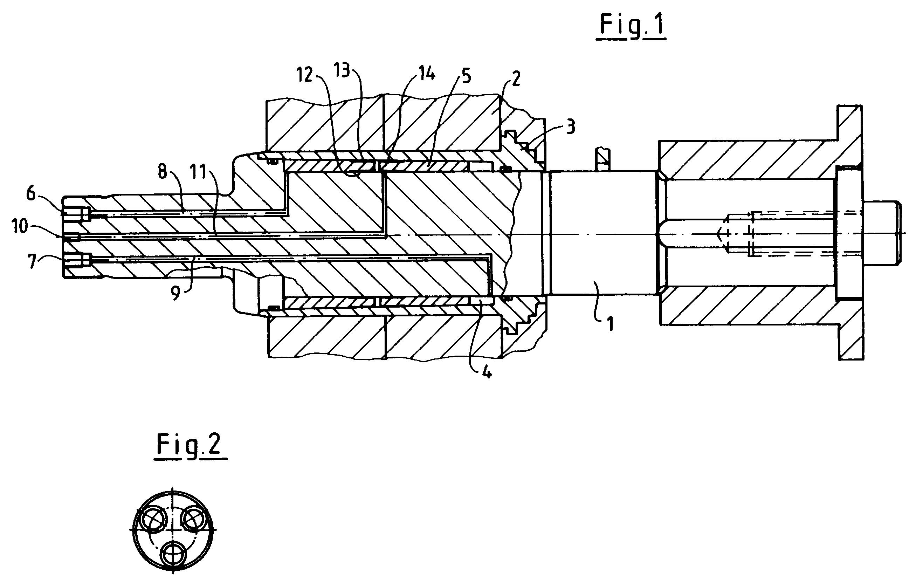

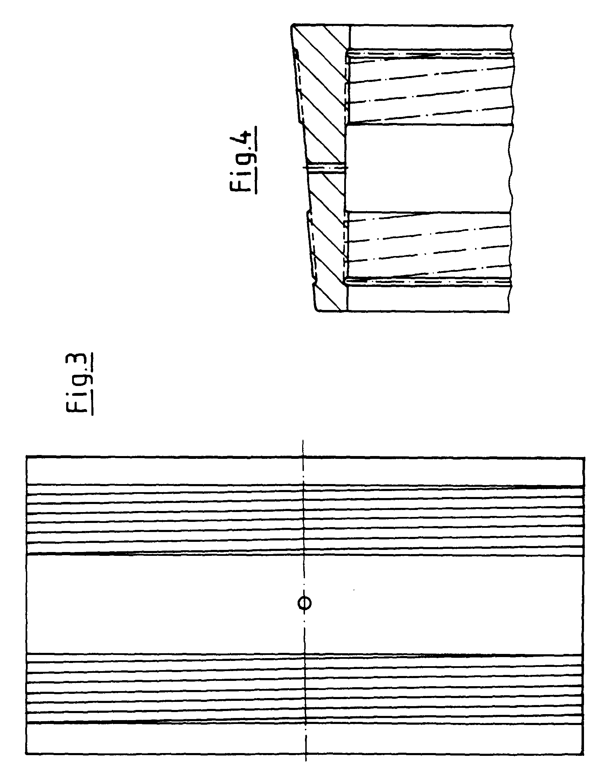

Um bei der vorhandenen hohen Radialbelastung eine leichte Axialbewegung des Kolbens 5 zu ermöglichen, wird ein Schmiermedium in die beteiligten Grenzflächen eingedrückt, und zwar zum einen zwischen die innere Mantelfläche des Kolbens 5 und die äußere Mantelfläche der Welle 1, und zum anderen zwischen äußerer Mantelfläche des Kolbens 5 und die innere Mantelfläche des Gehäuses 3. Zu diesem Zweck ist ein weiterer Anschluß 10 mit einer Leitung 11 vorgesehen. Außerdem ist der Kolben 5 im mittleren Bereich seiner Längserstreckung mit taschenartigen Aussparungen 12, 13 versehen. Auf deren Bedeutung wird weiter unten noch eingegangen werden. In der Mitte seiner Längserstreckung weist der Kolben eine Anzahl von Bohrungen 14 auf, von denen nur eine gezeigt ist. Außerdem weist der Kolben auf seinen beiden Mantelflächen - d.h. innen und außen - Schmiermittelnuten auf - siehe die Figuren 2 und 3. Jede einzelne Nut beginnt irgendwo an einer der Aussparungen 12, 13 und läuft spiralig in axialer Richtung zum betreffenden Ende des Kolbens 5 hin, ohne jedoch dieses Ende zu erreichen. Sie hört kurz vor dem betreffenden Ende auf. Es steht somit keine leitende Verbindung zwischen der betreffenden Aussparung, z.B. 12 oder 13, und der Druckleitung, z. B. 8 oder 9. Demgemäß findet auch keine Leckage statt zwischen der Leitung 11 einerseits und der Leitung 8 bzw. 9 andererseits.

Schmiermittel wird somit über den Druckanschluß 10 in die Leitung 11 eingeleitet, gelangt sodann in die Aussparung 12, und fließt weiter durch die radial innere Nuten in axialelr Richtung zu den beiden axialen Enden des Kolbens 5 hinn. Es gelangt aber außerdem noch aufgrund der Bohrungen 14 zur Tasche 13, von wo aus es in die radial äußeren Spiralnuten zu den beiden Enden des Kolbens hinströmt.

Aufgrund der beiden Aussparungen 12, 13 ist die Reibfläche verkleinert und damit auch die Reibung zwischen Kolben einerseits und Welle 1 sowie Gehäuse 3 andererseits verringert.

Bei dieser Ausführungsform ist besonders interessant, daß der Kolben 5 unmittelbar auf der Welle 1 gleitet. Das Gehäuse 3 ist somit praktisch nur aus einem hülsenartigen Teil aufgebaut, wie oben erwähnt.

Die Figuren 2 und 3 zeigen den Verlauf der Nuten. Jede Nut - innen wie außen - ist nur eingängig, im Gegensatz zum gattungsbildenden Stand der Technik, bei dem die Nuten zweigängig sind.

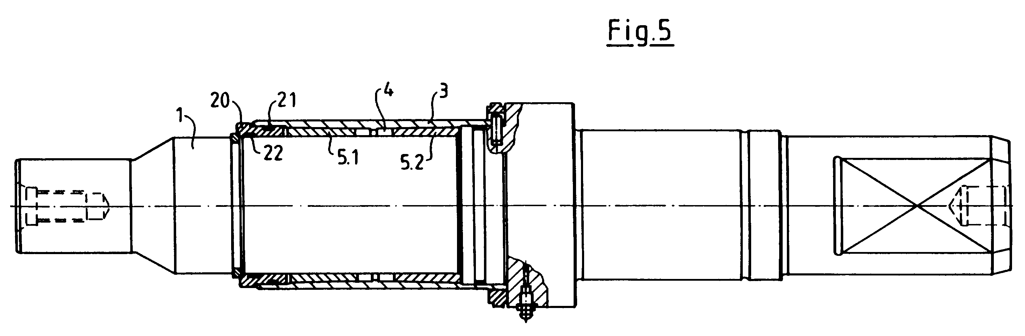

Die in Fig. 5 dargestellte Kupplung weist wiederum die wesentlichen Elemente auf, die auch die Kupplung gemäß Fig. 1 hat. Ein Unterschied besteht jedoch darin, daß nicht nur ein einziger Kolben, sondern zwei Kolben 5.1 und 5.2 vorgesehen sind. Der Ringraum 4 ist durch einen Dichtungsring 20 an der linken Stirnseite abgesperrt. Zwischen dem Dichtungsring 20 und den angrenzenden Elementen, nämlich der Welle 1 und dem Gehäuse 3, sind O-Ringe 21 und 22 vorgesehen.

Die Kanäle für das Arbeitsmedium sowie jene für das Schmiermedium sind im einzelnen nicht dargestellt. Jedoch werden die beiden Kolben zum Zwecke des Spannens dadurch beaufschlagt, daß Druckmedium in den Zwischenraum zwischen den beiden Kolben eingeleitet wird, so daß die beiden Kolben auseinandergetrieben werden.

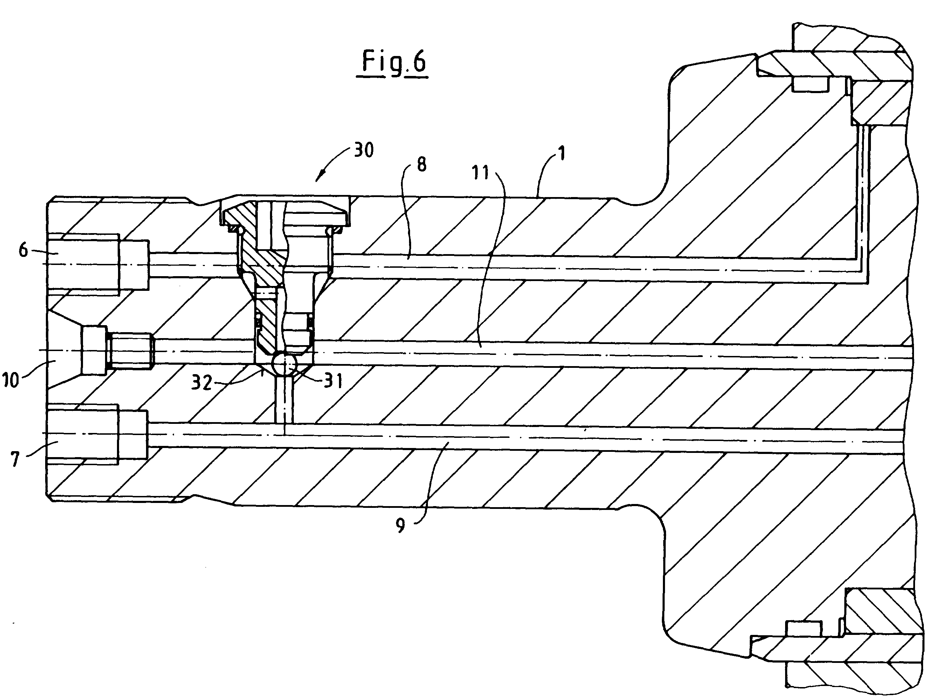

In Fig. 6 erkennt man eine besondere Ausbildung des Gegenstandes von Fig. 1. Im Wellenzapfen der Welle 1 ist nämlich ein Wechselventil 30 angeordnet. Dieses weist eine Ventilkugel 31 und einen Ventilsitz 32 auf. Dieses Ventil ist im einzelnen derart gestaltet, daß bei Beaufschlagung eines der beiden Druckanschlüsse 6,7 mit Arbeitsmedium zwar stets ein Teil dieses Arbeitsmediums in die Leitung 11 gelangt, um die Schmiermittelnuten mit Schmiermittel zu versorgen, jedoch nicht in die betreffende Leitung des anderen Druckmittelanschlusses. Wird beispielsweise Druckmittelanschluß 6 mit Druckmittel beaufschlagt, so pflanzt sich der Druck zur Leitung 8 fort, desgleichen durch Wechselventil 30 zur Schmiermittelleitung 11. Es wird jedoch die Verbindung zur leitung 9 durch die Ventilkugel 31 und den Ventilsitz 32 abgesperrt, so daß keine leitende Verbindung zwischen dem Druckmittelanschluß 6 einerseits und der Druckleitung 9 andererseits herrscht.

## Patentansprüche

1. Reibschlüssige Verbindung einer Welle (1) mit einem diese umschließenden Maschinenteil (2) mit einer Kupplung;
1.1 die Kupplung umfaßt ein Gehäuse (3), das eine Ringkammer (4) bildet;
1.2 ein in der Ringkammer (4) axial verschiebbarer Kolben;
1.3 eine Mantelfläche des Kolbens (5) oder eine dieser zugewandte Fläche sind konisch gestaltet;
1.4 die Ringkammer (4) weist an ihren axialen Endbereichen Druckanschlüsse (6, 7) auf;
gekennzeichnet durch die folgenden Merkmale:
1.5 das Gehäuse (3) weist nur eine einzige Hülse auf, die mit ihrer äußeren Mantelfläche an der Bohrungslaibung des Maschinenteiles (2) und mit ihrer inneren Mantelfläche an der äußeren Mantelfläche des Kolbens (5) anliegt;
1.6 das Gehäuse (3) liegt an seinen beiden Enden auf der Welle (1) auf;
1.7 die aufliegenden Enden des Gehäuses (3) sind gegen die Welle (1) abgedichtet;
1.8 die innere und die äußere Mantelfläche des Kolbens (5) weisen je eine Aussparung (12, 13) auf, die sich über einen wesentlichen Teil der Kolbenlänge erstreckt.

2. Reibschlüssige Verbindung nach Anspruch 1, dadurch gekennzeichnet, daß die aufliegenden Enden des Gehäuses (3) gegen die Welle (1) mittels einer Druckdichtung abgedichtet sind.

3. Reibschlüssige Verbindung nach Anspruch 1, dadurch gekennzeichnet, daß die aufliegenden Enden des Gehäuses (3) gegen die Welle (1) durch Verschweißen abgedichtet sind.

4. Reibschlüssige Verbindung nach einem der Ansprüche 1 bis 3, dadurch gekennzeichnet, daß sich die Aussparungen (12, 13) über wenigstens zwei Drittel der Kolbenlänge erstrecken.

## Claims

1. Frictional attachment of a shaft (1) with a machine member (2) which encases the latter by way of a coupling;
1.1 the coupling (2) encases a housing (3) which forms an annular chamber (4);
1.2 an axially displaceable piston in the annular chamber (4);
1.3 a casing surface of the piston (5) or a surface facing toward it are of conical design;
1.4 the annular chamber (4) has pressure connectors (6, 7) at its axial ends,
**characterised by** the following features:
1.5 the housing comprises only one single sleeve which is seated with its outer casing surface on the bore body of the machine member (2) and with its inner casing surface on the outer casing surface of the piston (5);
1.6 the housing (3) is seated at its two ends on the shaft (1);
1.7 the seated ends of the housing (3) are sealed towards the shaft (1);
1.8 the inner and the outer casing surface of the piston (5) each comprise a cutout (12, 13) which extends over a substantial part of the piston length.

2. Frictional connection according to Claim 1, **characterised in that** the seated ends of the housing (3) are sealed towards the shaft (1) by means of a pressure seal.

3. Frictional connection according to Claim 1, **characterised in that** the seated ends of the housing (3) are sealed towards the shaft (1) by welding.

4. Frictional connection according to one of Claims 1 to 3, **characterised in that** the cutouts (12, 13) extend over at least two thirds of the piston length.

## Revendications

1. Liaison par friction d'un arbre (1) avec une partie de machine (2) entourant cet arbre, au moyen d'un accouplement, dans laquelle :
1.1 l'accouplement comprend un boîtier (3) qui forme une chambre annulaire (4),
1.2 un piston est agencé de façon à pouvoir être déplacé en translation axiale dans la chambre annulaire (4),
1.3 une surface périphérique du piston (5) ou une surface faisant face à cette surface périphérique ont une forme conique,
1.4 la chambre annulaire (4) comporte des raccords de pression (6, 7) à l'endroit de ses zones d'extrémité axiale,
caractérisée par les particularités suivantes :
1.5 le boîtier (3) ne comprend qu'un seul manchon qui est appliqué, par sa surface périphérique extérieure, sur la surface d'alésage de la partie de machine (2) et, par sa surface périphérique intérieure, sur la surface périphérique extérieure du piston (5),
1.6 le boîtier (3) est en appui à ses deux extrémités sur l'arbre (1),
1.7 une étanchéité des extrémités du boîtier (3) qui sont en appui est assurée vis-à-vis de l'arbre (1),
1.8 les surfaces périphériques intérieure et extérieure du piston (5) comportent chacune un évidement (12, 13) qui s'étend sur une partie importante de la longueur du piston.

2. Liaison par friction selon la revendication 1, caractérisée en ce que l'étanchéité des extrémités du boîtier (3) qui sont en appui est assurée vis-à-vis de l'arbre (1) au moyen d'une garniture d'étanchéité à la pression.

3. Liaison par friction selon la revendication 1, caractérisée en ce que l'étanchéité des extrémités du boîtier (3) qui sont en appui est assurée vis-à-vis de l'arbre (1) par soudage.

4. Liaison par friction selon l'une des revendications 1 à 3, caractérisée en ce que les évidements (12, 13) s'étendent au moins sur les deux tiers de la longueur du piston.
